# EUROPEAN PATENT SPECIFICATION

(11) **EP 3 647 479 B1**
(45) Date of publication and mention of the grant of the patent: **14.12.2022**
(21) Application number: 19192773.0
(22) Date of filing: 21.08.2019
(51) Int. Cl.: D06F 39/04, D06F 58/26

(54) **LAUNDRY TREATING DEVICE HAVING AN INDUCTION MODULE**
WÄSCHEBEHANDLUNGSVORRICHTUNG MIT EINEM INDUKTIONSMODUL
DISPOSITIF DE TRAITEMENT DE LINGE AVEC UN CHAUFFAGE À INDUCTION

(30) Priority: 30.10.2018 KR 20180130769
(43) Date of publication of application: 06.05.2020
(73) Proprietor: LG Electronics Inc., Seoul 07336 (KR)
(72) Inventor: KIM, Woore, Seoul 08592 (KR); KIM, Beomjun, Seoul 08592 (KR); HONG, Sangwook, Seoul 08592 (KR)
(74) Representative: Vossius & Partner Patentanwälte Rechtsanwälte mbB

(56) References cited:
- EP-A1- 1 111 357
- EP-A1- 2 400 052
- WO-A1-2018/038580
- DE-B3-102016 110 859

## Description

### TECHNICAL FIELD

The present invention relates to a laundry treating device, and more particularly, to an apparatus for treating laundry with an induction heater.

### BACKGROUND ART

Generally, a laundry treating device is a device for washing, drying and/or refreshing laundry. Refreshing means to remove dust of laundry, smooth the creases of laundry, or sterilize laundry using air, steam and the like. Examples of a laundry treating device include a washer, a drier and a refresher. The refresher is a sort of a laundry caring device (or a laundry cleaner) and its product name is called 'Tromm Styler' by LG Electronics, or the like.

A laundry treating device is normally provided with a heater. The heater heats wash water or air, and an electric heater or a gas heater is used in general. Recently, an induction heater configured to heat wash water or air using the principle of induction heating is proposed. The induction heater generates an induced current to heat a conductor.

Generally, an induction heater heats a drum that is a conductor, and wash water, air, laundry or the like is heated by the heated drum. Therefore, to prevent a drum from being overheated in a laundry treating device employing an induction heater, it is preferable that the temperature of the drum is accurately measured. However, since a drum is a rotated part by being provided within a tub, it is difficult to measure the temperature of the drum accurately. Thus, the demand for ways to accurately measure the temperature of the drum is rising.

EP 2 400 052 A1 discloses a device in which the induction heating system is used in order to heat the water and/or air. The device includes a heating coil is formed by a conductive material coiled around the tank provided in the device. Said heating coil is powered by the driver unit and the powered heating coil creates an electromagnetic field within the tank. Electromagnetic field, which is created, causes current inducing in the spinning tube provided in the tank and the spinning tube is heated.

### DISCLOSURE OF THE INVENTION

### TECHNICAL TASKS

Accordingly, embodiments of the present invention are directed to a laundry treating apparatus that substantially obviates one or more problems due to limitations and disadvantages of the related art.

One object of the present invention is to provide a laundry treating apparatus capable of measuring the temperature of a drum accurately.

Another object of the present invention is to provide a laundry treating apparatus capable of preventing contamination of a sensor that measures the temperature of a drum.

Further object of the present invention is to provide a laundry treating apparatus capable of decontamination of a sensor that measures the temperature of a drum.

Technical tasks obtainable from the present invention are non-limited by the above-mentioned technical tasks. And, other unmentioned technical tasks can be clearly understood from the following description by those having ordinary skill in the technical field to which the present invention pertains.

### TECHNICAL SOLUTION

The invention is defined in the independent claim. Dependent claims describe preferred embodiments. The present invention provides a non-contact type temperature sensor (e.g., an infrared sensor) installed at a tub to measure a temperature of a drum. The present invention is provided with a noise prevention structure to measure a radiometric quantity of a drum by the infrared sensor. The noise prevention structure includes a barrel lens having a guide part that guides the radiometric quantity of the drum to the infrared sensor. The present invention provides a contamination prevention cap to prevent contamination of the barrel lens. The present invention includes a barrel lens provided to a prescribed location of the tub corresponding to a dewatering hole of the drum to decontaminate the barrel lens.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, an apparatus for treating laundry according to one embodiment of the present invention may include a cabinet, a tub provided within the cabinet, a drum provided within the tub to receive a treatment target therein, the drum made of metallic material, an induction module provided to the tub to heat the drum by induction, a non-contact temperature sensor that measures temperature using thermal radiation radiated by material provided to the tub to measure a temperature of the drum, and a barrel lens connected to the non-contact temperature sensor so that thermal radiation radiated from the drum enters the barrel lens, wherein the barrel lens includes a guide portion guiding vertically incident thermal radiation to the infrared sensor only.

Preferably, the guide portion may have a cylindrical shape and an axis of the cylindrical shape may be aligned with that of the non-contact temperature sensor.

More preferably, a tap having prominences and depressions may be provided to an inside of the guide portion.

More preferably, the guide portion may include a recessed portion provided to a top side of the guide portion so as to have the non-contact temperature sensor coupled thereto.

And, the guide portion may further include an expanding portion provided to a bottom side of the guide portion so that the thermal radiation enters the expanding pipe portion.

Moreover, a diameter of the guide portion may be smaller than that of the barrel lens, one end of the expanding portion may correspond to the diameter of the guide portion, and the other end of the expanding portion may be greater than a diameter of the one end.

More preferably, a diameter of the guide portion may correspond to a diameter of an entrance of the non-contact temperature sensor.

And, a contamination preventing cap may be provided to a fore-end of the barrel lens.

Moreover, the contamination preventing cap may be provided to a fore-end of the expanding portion to open/close the expanding portion and made of infrared-transmissive material.

And, the barrel lens may be provided to a position corresponding to a vicinity of a center of a rotation shaft of the drum in the tub, and more preferably, to a vicinity of a rotation shaft center of the drum in the tub.

Preferably, the barrel lens is provided to a position corresponding to a dewatering hole of the drum in the tub.

Preferably, the barrel lens may be provided within 20 mm right and left apart from the center of the rotation shaft of the drum in the tub. The respective features of the aforementioned embodiment can be complexly implemented in other embodiments unless contradictory or exclusive.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the claims will become apparent to those skilled in the art from this detailed description.

### ADVANTAGEOUS EFFECTS

Accordingly, an apparatus for treating laundry according to the present invention provides the following effects and/or features.

First of all, according to the present invention, the temperature of a drum can be accurately measured advantageously.

Secondly, according to the present invention, contamination of a sensor that measures the temperature of a drum can be prevented advantageously.

Thirdly, according to the present invention, a sensor that measures the temperature of a drum can be decontaminated.

Effects obtainable from the present invention may be non-limited by the above mentioned effect. And, other unmentioned effects can be clearly understood from the following description by those having ordinary skill in the technical field to which the present invention pertains.

### DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.
FIG. 1 is a longitudinal section diagram showing a general laundry treating device schematically.
FIG. 2 is a cross-sectional diagram schematically showing a laundry treating apparatus according to one embodiment which is not part of the present invention.
FIG. 3 is a conceptual diagram schematically showing a laundry treating apparatus according to an embodiment of the present invention.
FIG. 4 is a cross-sectional diagram of a barrel lens shown in FIG. 3.
FIG. 5 is a cross-sectional diagram showing a modified example of FIG. 4.
FIG. 6 is a perspective diagram showing a modified example of a barrel lens shown in FIG. 3 and FIG. 4.
FIG. 7 is a perspective diagram to describe an installed location of a non-contact temperature sensor shown in FIG. 3.

### BEST MODE

### MODE FOR INVENTION

A laundry treating device according to an embodiment of the present invention will be described with reference to the accompanying drawings. Description will now be given in detail according to specific embodiments disclosed herein, with reference to the accompanying drawings. Yet, the embodiments and drawings are used to help the understanding of the present invention. Moreover, to help the understanding of the present invention, the accompanying drawings may be illustrated in a manner of exaggerating sizes of some components instead of using a real scale. Thus, the present invention is non-limited to the following embodiment, and it is intended that the present invention covers the modifications and variations of this invention provided they come within the scope of the appended claims.

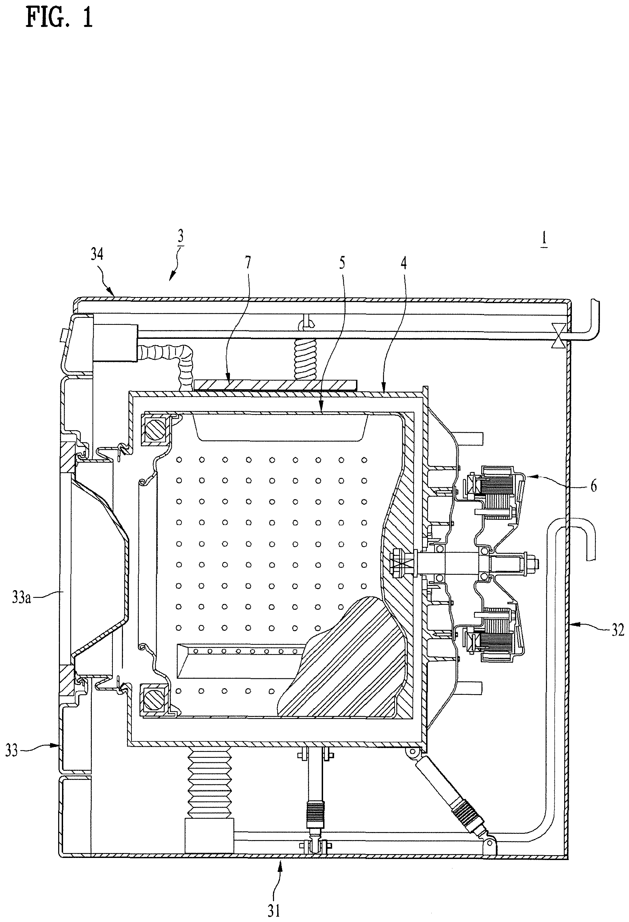

First of all, an overall structure of a laundry treating device according to an embodiment of the present invention is described with reference to FIG. 1. In the following, a washer 1 will be taken as an example of the laundry treating device.

A tub 4 is provided within a cabinet 3. A drum 5 is rotatably provided within the tub 4. And, a motor 6 configured to rotate the drum 5 may be provided to a rear side of the tub 4.

Meanwhile, the cabinet 3 preferably includes a base 31, a front panel 33, a rear panel 32, a side panel (not shown) and a top panel 34. A door 33a is preferably provided to the front panel 33.

Meanwhile, an induction heater 7 is provided to a prescribed position, and more preferably, to an outside of the tub 4. The drum 5 is preferably made of conductor, e.g., metal material. The induction heater 7 heats the drum 5 by induction and wash water and/or air is heated by the heated drum 5.

Particularly, an induction module is provided to the tub 4 so as to have a spaced interval with a circumferential surface of the drum 5. The induction module conceptually includes the induction heater 7, whereby the circumferential surface of the drum 5 can be heated through the magnetic field generated from applying a current to a wire-winding coil.

Meanwhile, a temperature sensor configured to measure a temperature of the drum 5 is preferably provided to a prescribed position on the tub 4.

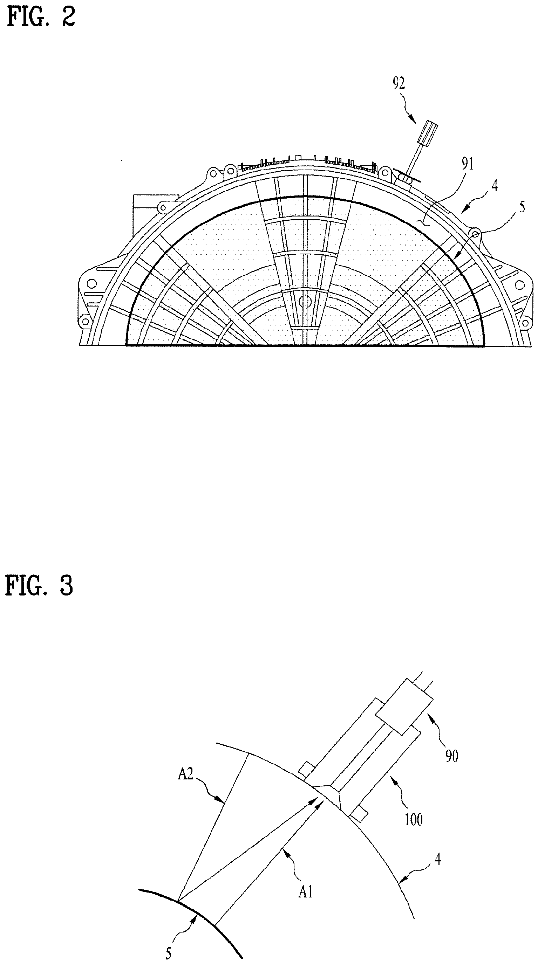

A temperature sensor according to one embodiment which is not part of the present invention is described with reference to FIG. 2.

The reason why a temperature sensor configured to measure a temperature of the drum 5 is provided to the tub instead of being directly provided to the drum 5 is described as follows. First of all, the drum 5 is provided within the tub 4 and rotated generally in the course of washing, rinsing, dewatering, drying and the like. As it is not easy to directly install the temperature sensor configured to measure a temperature of the drum 5 at the drum 5 in direct, the temperature sensor is preferably provided to the tub 4.

The temperature sensor may include a contact type temperature sensor, e.g., a thermistor 92. The thermistor 92 measures a temperature of the drum 5 indirectly by measuring an air temperature around the drum 5 instead of directly measuring a temperature of the drum 5. Once the drum 5 is heated, air between the drum 5 and the tub 4 is heated as well. The thermistor 92 measures the temperature of the air between the drum 5 and the tub 91, thereby measuring the temperature of the drum 5 in direct.

According to such mechanism, a time difference is generated between the temperature of the drum 5 and the temperature measured by the thermistor 92. Namely, if the drum 5 is heated, air around the drum 5 is heated and the thermistor 92 measures the temperature of the air. Moreover, in case that the drum 5 is heated locally, the thermistor 92 has difficulty in measuring the locally heated temperature. The reason for this is that the thermistor 92 measures an average temperature of the air in a space 91 between the drum 5 and the tub 4. Moreover, since the temperature of the air between the drum 5 and the tub 4 is affected by condensate water, drying load and the like as well as by the temperature of the drum 5, the temperature measured by the thermistor 92 may have a difference from a real temperature of the drum 5.

A temperature sensor according to an embodiment of the present invention is described with reference to FIG. 3.

The present embodiment proposes to directly measure a temperature of the drum 5 using a non-contact type sensor, e.g., a temperature sensor using infrared (hereinafter 'infrared sensor' or 'IR sensor').

Description will now be given in detail as follows.

An IR sensor 90 measures a temperature using thermal radiation radiated by material. The IR sensor 90 is provided to the tub 4 and directly measures a temperature of the drum 5 using the IR sensor 90.

The IR sensor 90 directly measures a temperature of the drum 5 by measuring a radiometric quantity A1 of the drum 5. Hence, if the IR sensor 90 is used, it is able to eliminate a time difference between the temperature of the drum 5 and the temperature measured by the IR sensor 90. Moreover, if the IR sensor 90 is used, it is able to measure a local temperature of the drum 5 that is being rotated.

Meanwhile, if the IR sensor 90 is provided to the tub 4, as a temperature of the tub 4 is measured by the IR sensor 90 as well as a temperature of the drum 5, error may be generated. This is because a radiometric quantity A2 of the tub 4 may be measured by the IR sensor 90 as well as the radiometric quantity A1 of the drum 5. Hence, in case of using the IR sensor 90, it will be preferable that a structure capable of measuring the radiometric quantity of the drum 5 only is provided if possible.

When a temperature of the drum 5 is measured, a radiometric quantity coming from an ambient environment, e.g., the radiometric quantity A2 of the tub is a sort of thermal noise as well as the radiometric quantity A1 of the drum 5. Hence, it is preferable to employ a noise prevention structure capable of preventing such noise from entering the IR sensor 90. As one example of the noise prevention structure, it is able to use a barrel lens that absorbs or reflects noise. For example, a barrel lens 100 may be provided to an entrance of the IR sensor 90.

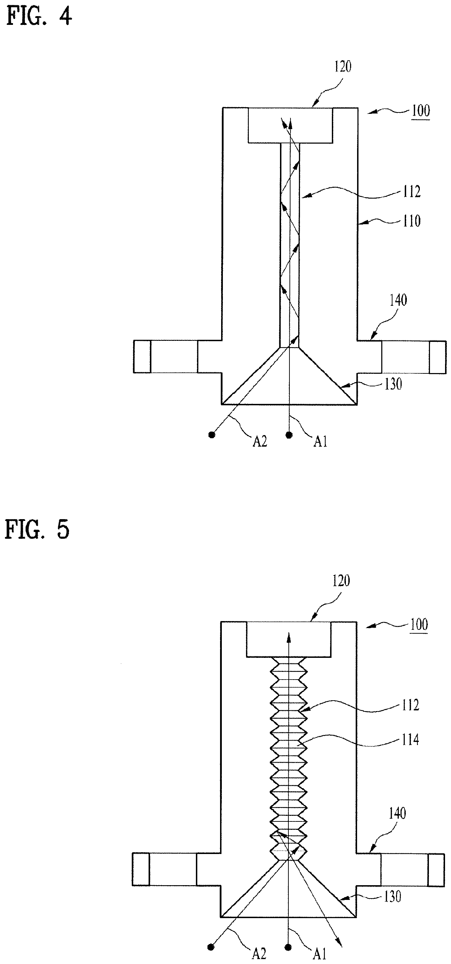

The barrel lens 100 is described with reference to FIG. 4 as follows.

First of all, a body 110 having a guide portion 112 guiding thermal radiation to the IR sensor 90 is preferably provided to the barrel lens 100. By the guide portion 112, only a radiometric quantity coming in straight to the guide portion 112 is allowed to enter the IR sensor 90. Yet, a radiometric quantity failing to come in straight is not allowed to enter the IR sensor 90 by the guide portion 112. Hence, for example, a central axis of the guide portion 112 is preferably aligned with a central axis of the IR sensor 90.

The guide portion 112 may include a hollow pipe in a cylindrical shape having a small diameter. A size of the guide portion 112 preferably corresponds to a size of the entrance of the IR sensor.

Meanwhile, a recessed portion 120 to which the IR sensor is coupled is provided to a top side of the guide portion 112 and an expanding portion 130 may be provided to a bottom side of the guide portion 112. The recessed portion 120 preferably has a shape corresponding to a shape of an entrance side of the IR sensor. And, a diameter of the recessed portion 120 is preferably greater than that of the guide portion 112. Moreover, the expanding portion 130 may be in a shape having a wide entrance in which thermal radiation flows and a narrow exit.

Meanwhile, a coupling portion 140 for coupling the barrel lens 100 to the tub 4 may be provided to a lower part of the body 110. Hence, the barrel lens 100 can be coupled to the tub 4 using a screw and the like.

Operation of the barrel lens 100 is described with reference to FIG. 3 and FIG. 4 as follows.

First of all, the IR sensor 90 and the barrel lens 100 may be disposed toward the drum 5. Hence, thermal radiation A1 radiated from a prescribed position of the drum 5, i.e., the drum 5 located under the barrel lens 100 is vertically incident on the guide portion 112 and then arrives at the IR sensor 90. Hence, by the thermal radiation radiated from the drum 5, the IR sensor 90 can measure a temperature of the drum 5.

On the contrary, noise other than the thermal radiation radiated from the drum 5, e.g., thermal radiation A2 of the tub is incident on the guide portion 112 with a prescribed inclination instead of being vertically incident. The thermal radiation incident on the guide portion 112 with the prescribed inclination proceeds by repeating reflections in the guide portion 112 and is finally inclined instead of going straight to the entrance of the IR sensor 90. Therefore, the noise can avoid being sensed by the IR sensor 90.

Another embodiment of the barrel lens 100 is described with reference to FIG. 5 as follows.

First of all, the above-described barrel lens 100 can prevent noise from being measured by the IR sensor 90 but has difficulty in completely preventing the noise. Therefore, the present embodiment proposes a structure capable of further eliminating noise.

The barrel lens of the present embodiment has the structure similar to that of the former barrel lens of the aforementioned embodiment. Yet, according to the present embodiment, a tap 114 is provided to the guide portion 112 of the barrel lens 100. The tap 114 may be formed in a shape of a multitude of prominences and depressions. Namely, the thermal radiation (noise) failing to be incident on the guide portion 112 by going straight repeats reflections in the tap 114. In doing so, the thermal radiation is guided to be reflected out of the guide portion 112 by the shape of the prominences and depressions 114.

As described above, the noise incident on the guide portion 112 is externally reflected by the tap 114 again so as not to arrive at the IR sensor. Hence, it is able to effectively prevent the external noise from arriving at the IR sensor 90. In order to have the external noise reflected out of the guide portion 112, the shapes, sizes, numbers and the like of the tap 114 can be appropriately determined through test and simulations.

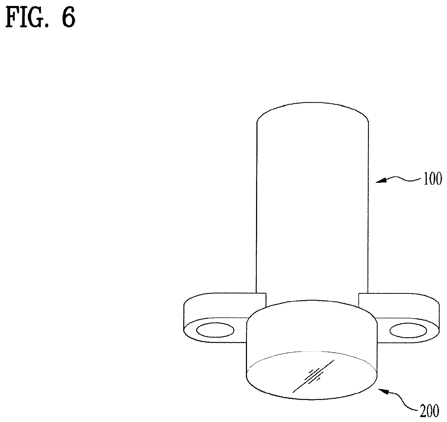

In the following, an embodiment of a structure for preventing contamination of the barrel lens 100 is described with reference to FIG. 6.

To prevent the contamination of the barrel lens 100, a cap 200 is preferably provided to an entrance side of the barrel lens 100. The cap 200 blocks the entrance of the body 110, thereby playing a role in preventing external particles or alien substance from coming into the body 110, and more particularly, into the guide portion 112. A shape of the cap 200 is non-limited if such a function is achieved.

Yet, since a fore-end of the barrel lens 100 has a cylindrical shape, the shape of the cap 200 preferably has a cylindrical shape. And, the cap 200 is preferably made of infrared-transmissive material.

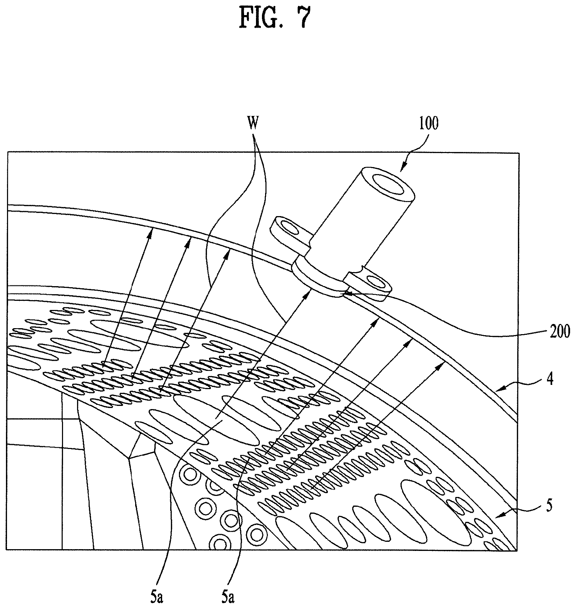

An installation position of the barrel lens 100 is described with reference to FIG. 7 as follows.

First of all, as described above, the drum 5 is a component that is rotated. Hence, the IR sensor or the barrel lens 100 is preferably provided to the tub 4 that is not rotated.

A preferable installation position of the IR sensor or the barrel lens 100 is described in detail as follows. In the following, an installation position of the IR sensor provided with the barrel lens 100 is described.

Although the cap 200 for contamination prevention is provided to the barrel lens 100, as a use time elapses, contamination may be accumulated on the cap 200. Hence, it is preferable to remove the contamination of the cap 200. To this end, a following method is proposed.

During an operation of a laundry treating device, and more particularly, in the course of dewatering, water W in the drum 5 is discharged in a direction of the tub 4 through dewatering holes 5a of the drum 5 by a centrifugal force. The cap 200 is preferably provided to a position of the tub 4 corresponding to the dewatering holes 5a. If so, it is able to remove the contamination attached to the cap 200 using the water W discharged through the dewatering holes 5a.

Meanwhile, the IR sensor can measure a local temperature of the drum 5. Hence, the IR sensor is preferably installed at a position for measuring a maximum temperature of the drum. Thus, the barrel lens 100 is preferably provided to an area of the tub 4 corresponding to a maximum temperature area of the drum 5. For example, the drum 5 normally has a maximum temperature near a center in an axial direction. Correspondingly, it is preferable that the barrel lens 100 is provided near a center in an axial direction of the tub 4, and more preferably, within about 20 mm right and left apart from the center.

It will be apparent to those skilled in the art that various modifications and variations can be made in the present invention without departing from the scope of the inventions. Thus, it is intended that the present invention covers the modifications and variations of this invention provided they come within the scope of the appended claims.

For example, although an IR sensor is described as a non-contact type sensor in an embodiment of the present invention, the principle of the present invention is applicable to other non-contact type sensors. Moreover, although a washer is taken as an example for description, the principle of the present invention is also applicable to a drier, a refresher, etc.

### INDUSTRIAL APPLICABILITY

Although an IR sensor is described as a non-contact type sensor in an embodiment of the present invention for example, the principle of the present invention is applicable to other non-contact type sensors. Moreover, although a washer is taken as an example for description, the principle of the present invention is also applicable to a drier, a refresher, etc.

## Claims

1. An apparatus for treating laundry, comprising:
a cabinet (3);
a tub (4) provided in the cabinet (3);
a drum (5) provided in the tub (4) to receive a laundry for treatment therein, the drum (5) being made of metallic material; and
an induction module provided to the tub (4) to heat the drum (5) by induction;
wherein the apparatus is **characterised in that** it further comprises:
a non-contact temperature sensor (90) that measures temperature using thermal radiation radiated by material provided to the tub (4) to measure a temperature of the drum (5);
a barrel lens (100) connected to the non-contact temperature sensor (90) so that thermal radiation radiated from the drum (5) enters the barrel lens (100),
wherein the barrel lens (100) includes a guide portion (112) guiding vertically incident thermal radiation to the non-contact temperature sensor (90).

2. The apparatus of claim 1, wherein the guide portion (112) has a cylindrical shape and wherein an axis of the cylindrical shape is aligned with that of the non-contact temperature sensor (90).

3. The apparatus of claim 2, wherein a tap (114) having prominences and depressions is provided to an inside of the guide portion (112).

4. The apparatus of claim 2 or 3, wherein the guide portion (112) includes a recessed portion (120) provided to a top side of the guide portion (112) so as to have the non-contact temperature sensor (90) coupled thereto.

5. The apparatus of claim 4, wherein the guide portion (112) further includes an expanding portion (130) provided to a bottom side of the guide portion (112) so that the thermal radiation enters the expanding portion (130).

6. The apparatus of claim 5, wherein a diameter of the guide portion (112) is smaller than that of the barrel lens (100), wherein one end of the expanding portion (130) corresponds to the diameter of the guide portion (112), and wherein the other end of the expanding portion (130) is greater than a diameter of the one end.

7. The apparatus of any one of claims 2 to 6, wherein a diameter of the guide portion (112) corresponds to a diameter of an entrance of the non-contact temperature sensor (90).

8. The apparatus of any one of the preceding claims, wherein a contamination preventing cap is provided to a fore-end of the barrel lens (100).

9. The apparatus of claim 8, wherein the contamination preventing cap is provided to a fore-end of the expanding portion (130) to open/close the expanding portion (130) and made of infrared-transmissive material.

10. The apparatus of any one of the preceding claims, wherein the barrel lens (100) is provided to a position corresponding to a vicinity of a center of a rotation shaft of the drum (5) in the tub (4).

11. The apparatus of claim 10, wherein the barrel lens (100) is provided to a position corresponding to a vicinity of a rotation shaft center of the drum (5) in the tub (4).

12. The apparatus according to one of the preceding claims,
wherein the barrel lens (100) is provided to a position corresponding to a dewatering hole (5a) of the drum (5) in the tub (4).

13. The apparatus of claim 12, wherein the barrel lens (100) is provided within 20 mm right and left apart from the center of the rotation shaft of the drum (5) in the tub (4).

## Patentansprüche

1. Wäschebehandlungsvorrichtung, die aufweist:
einen Schrank (3);
eine in dem Schrank (3) bereitgestellte Wanne (4);
eine in der Wanne (4) bereitgestellte Trommel (5), um Wäsche für die Behandlung darin aufzunehmen, wobei die Trommel (5) aus metallischem Material hergestellt ist; und
ein Induktionsmodul, das an der Wanne (4) bereitgestellt ist, um die Trommel (5) durch Induktion zu heizen;
wobei die Vorrichtung **dadurch gekennzeichnet ist, dass** sie ferner aufweist:
einen berührungslosen Temperatursensor (90), der die Temperatur unter Verwendung von Wärmestrahlung, die von an der Wanne (4) bereitgestelltem Material abgestrahlt wird, misst, um eine Temperatur der Trommel (5) zu messen;
eine mit dem berührungslosen Temperatursensor (90) derart verbundene Trommellinse (100), dass die von der Trommel (5) abgestrahlte Wärmestrahlung in die Trommellinse (100) eintritt,
wobei die Trommellinse (100) einen Führungsabschnitt (112) aufweist, der vertikal einfallende Wärmestrahlung zu dem berührungslosen Temperatursensor (90) führt.

2. Vorrichtung nach Anspruch 1, wobei der Führungsabschnitt (112) eine zylindrische Form hat und wobei eine Achse der zylindrischen Form mit der des berührungslosen Temperatursensors (90) ausgerichtet ist.

3. Vorrichtung nach Anspruch 2, wobei ein Wasseranschluss (114) mit Vorsprüngen und Vertiefungen in einem Inneren des Führungsabschnitts (112) bereitgestellt ist.

4. Vorrichtung nach Anspruch 2 oder 3, wobei der Führungsabschnitt (112) einen vertieften Abschnitt (120) umfasst, der an einer Oberseite des Führungsabschnitts (112) derart bereitgestellt ist, dass er den berührungslosen Temperatursensor (90) damit gekoppelt hat.

5. Vorrichtung nach Anspruch 4, wobei der Führungsabschnitt (112) ferner einen Erweiterungsabschnitt (130) aufweist, der an einer Unterseite des Führungsabschnitts (112) bereitgestellt ist, so dass die Wärmestrahlung in den Erweiterungsabschnitt (130) eintritt.

6. Vorrichtung nach Anspruch 5, wobei ein Durchmesser des Führungsabschnitts (112) kleiner als der der Trommellinse (100) ist, wobei ein Ende des Erweiterungsabschnitts (130) dem Durchmesser des Führungsabschnitts (112) entspricht, und wobei das andere Ende des Erweiterungsabschnitts (130) größer als ein Durchmesser des einen Endes ist.

7. Vorrichtung nach einem der Ansprüche 2 bis 6, wobei ein Durchmesser des Führungsabschnitts (112) einem Durchmesser eines Eingangs des berührungslosen Temperatursensors (90) entspricht.

8. Vorrichtung nach einem der vorhergehenden Ansprüche, wobei eine Kappe zur Verhinderung von Verunreinigungen an einem Vorderende der Trommellinse (100) bereitgestellt ist.

9. Vorrichtung nach Anspruch 8, wobei die Kappe zur Verhinderung von Verunreinigungen an einem Vorderende des Erweiterungsabschnitts (130) bereitgestellt ist, um den Erweiterungsabschnitt (130) zu öffnen/schließen, und aus einem infrarotdurchlässigen Material hergestellt ist.

10. Vorrichtung nach einem der vorhergehenden Ansprüche, wobei die Trommellinse (100) an einer Position, die einer Nachbarschaft einer Mitte einer Drehwelle der Trommel (5) in der Wanne (4) entspricht, bereitgestellt ist.

11. Vorrichtung nach Anspruch 10, wobei die Trommellinse (100) an einer Position, die einer Nachbarschaft einer Drehwellenmitte der Trommel (5) in der Wanne (4) entspricht, bereitgestellt ist.

12. Vorrichtung nach einem der vorhergehenden Ansprüche,
wobei die Trommellinse (100) an einer Position bereitgestellt ist, die einem Entwässerungsloch (5a) der Trommel (5) in der Wanne (4) entspricht.

13. Vorrichtung nach Anspruch 12, wobei die Trommellinse (100) innerhalb von 20 mm rechts und links entfernt von der Mitte der Drehwelle der Trommel (5) in der Wanne (4) bereitgestellt ist.

## Revendications

1. Appareil de traitement de linge, comprenant :
une carrosserie (3) ;
une cuve (4) disposée dans la carrosserie (3) ;
un tambour (5) disposé dans la cuve (4) pour recevoir du linge à des fins de traitement en son sein, le tambour (5) étant constitué d'un matériau métallique ; et
un module d'induction disposé dans la cuve (4) pour chauffer le tambour (5) par induction ;
dans lequel l'appareil est **caractérisé en ce qu'**il comprend en outre :
un capteur de température sans contact (90) qui mesure une température au moyen d'un rayonnement thermique rayonnant à partir d'un matériau disposé dans la cuve (4) pour mesurer une température du tambour (5) ;
une lentille cylindre (100) connectée au capteur de température sans contact (90) de sorte qu'un rayonnement thermique rayonnant à partir du tambour (5) pénètre la lentille cylindre (100),
dans lequel la lentille cylindre (100) comprend une partie guide (112) guidant un rayonnement thermique incident verticalement vers le capteur de température sans contact (90).

2. Appareil selon la revendication 1, dans lequel la partie guide (112) a une forme cylindrique et dans lequel un axe de la forme cylindrique est aligné avec celui du capteur de température sans contact (90).

3. Appareil selon la revendication 2, dans lequel un trou taraudé (114) comportant des protubérances et des creux est prévu d'un côté intérieur de la partie guide (112) .

4. Appareil selon la revendication 2 ou la revendication 3, dans lequel la partie guide (112) comprend une partie évidée (120) disposée d'un côté supérieur de la partie guide (112) de façon à faire l'objet d'un accouplement avec le capteur de température sans contact (90) .

5. Appareil selon la revendication 4, dans lequel la partie guide (112) comprend en outre une partie allant en s'élargissant (130) disposée d'un côté inférieur de la partie guide (112) de sorte que le rayonnement thermique pénètre la partie allant en s'élargissant (130).

6. Appareil selon la revendication 5, dans lequel un diamètre de la partie guide (112) est inférieur à celui de la lentille cylindre (100), dans lequel une extrémité de la partie allant en s'élargissant (130) correspond au diamètre de la partie guide (112), et dans lequel le diamètre de l'autre extrémité de la partie allant en s'élargissant (130) est supérieur à un diamètre de la première extrémité.

7. Appareil selon l'une quelconque des revendications 2 à 6, dans lequel un diamètre de la partie guide (112) correspond à un diamètre d'une entrée du capteur de température sans contact (90).

8. Appareil selon l'une quelconque des revendications précédentes, dans lequel un capuchon de protection contre une contamination est disposé au niveau d'une extrémité avant de la lentille cylindre (100).

9. Appareil selon la revendication 8, dans lequel le capuchon de protection contre une contamination est disposé au niveau d'une extrémité avant de la partie allant en s'élargissant (130) pour ouvrir/fermer la partie allant en s'élargissant (130) et est constitué d'un matériau laissant passer la lumière infrarouge.

10. Appareil selon l'une quelconque des revendications précédentes, dans lequel la lentille cylindre (100) est disposée à une position correspondant à une proximité d'un centre d'un arbre de rotation du tambour (5) dans la cuve (4).

11. Appareil selon la revendication 10, dans lequel la lentille cylindre (100) est disposée à une position correspondant à une proximité d'un centre d'arbre de rotation du tambour (5) dans la cuve (4).

12. Appareil selon l'une des revendications précédentes,
dans lequel la lentille cylindre (100) est disposée à une position correspondant à un trou d'évacuation d'eau (5a) du tambour (5) dans la cuve (4).

13. Appareil selon la revendication 12, dans lequel la lentille cylindre (100) est disposée espacée de 20 mm au maximum vers la droite et vers la gauche du centre de l'arbre de rotation du tambour (5) dans la cuve (4).
